(19) **Europäisches Patentamt**

**European Patent Office**

**Office européen des brevets**

(11) **EP 1 304 404 A1**

(12) # EUROPEAN PATENT APPLICATION

(43) Date of publication:
**23.04.2003 Bulletin 2003/17**

(21) Application number: **01124267.4**

(22) Date of filing: **17.10.2001**

(51) Int Cl.⁷: **D03D 13/00**, D03D 15/00,
B29C 70/22, F16L 11/08,
D04H 3/04

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **MILLIKEN EUROPE N.V.**
**B-9000 Gent (BE)**

(72) Inventors:
• **De Meyer, Willy**
**B-9032 Drongen (BE)**

• **Faket, Mark**
**B-9000 Gent (BE)**
• **Vangheluwe, Lieven**
**B-9600 Ronse (BE)**

(74) Representative: **HOFFMANN - EITLE**
**Patent- und Rechtsanwälte**
**Arabellastrasse 4**
**81925 München (DE)**

(54) **Reinforcement fabrics having at least two reinforcement directions**

(57)     The invention provides a fabric providing reinforcement in at least two directions, at least comprising a first bias filament yarn layer having a first reinforcement direction and a second bias filament yarn layer having a second reinforcement direction, wherein the first and the second reinforcement direction form an angle of 52-88°, wherein the longitudinal direction of the fabric and at least one of the first and the second reinforcement direction form an angle of 30° or less and wherein the first and the second yarn layer are chemically and/or mechanically connected to one another.

The invention also provides a method of preparing a hose or pipe comprising the step of wrapping the fabric strip around a hose or pipe preform and a hose or pipe obtainable by this method.

Figure 1

**Description**

Field of the Invention

The invention concerns fabrics, a method of preparing a hose or pipe employing said fabrics, and hoses or pipes obtainable by these methods.

Background of the Invention

It has been known that rubber and other polymeric products of numerous varieties can be reinforced by fabrics, so-called reinforcing fabrics. Due to the production technology, however, the reinforcement provided by such reinforcing fabrics is generally only unidirectional. For example, rubber hoses are usually reinforced using single end cords or cord fabrics. Since in many applications a reinforcement in more than one direction is required, such reinforcing fabrics have to be used in various layers to provide proper reinforcement.

To provide a bi-directional reinforcement, US 4 845 963 describes a straight yarn reinforcing fabric for power transmission belts, hoses and the like, which is formed by upper and lower sets of non-interlaced, crossing bias yarns in a symmetrical manner so that the upper and the lower set form the same angle with respect to the axis on which the fabric is constructed, this angle being typically 60 degrees. At selected crossing points, bias yarns from the respective sets are engaged by loop portions of longitudinally extending lines of stitching. Symmetrical fabrics such as the ones disclosed in this document require multiple wrapping around hoses to provide a symmetrical reinforcement.

WO 99/39032 discloses a cord fabric the pick threads of which run at an angle of at least approximately 70 degrees to the warp threads and on at least one side of the cord fabric the pick threads protrude a certain distance beyond the outermost warp threads. Alternatively or in addition the outermost warp threads in at least one border area of the textile product are thinner than the remaining warp threads. These measures are disclosed to be essential for providing a reinforcement in weft direction which is essentially the same as the one in warp direction. Moreover, to ensure that the warp threads run in the longitudinal direction of the fabric, the warp threads have to be provided on a beam or on bobbins, the number of bobbins defining the number of ends in the fabric. This results in a waste of yarn provided on the bobbins.

In light of this prior art, it is the object underlying the present invention to provide a reinforcement fabric which is easily and efficiently preparable and provides a highly symmetrical reinforcement even when applied as a single layer.

It is another object of the present invention to provide a corresponding hose or pipe comprising this reinforcement fabric and a method for its production.

Summary of the Invention

The first object of the invention is solved by the provision of a fabric providing reinforcement in at least two directions, at least comprising a first bias filament yarn layer having a first reinforcement direction and a second bias filament yarn layer having a second reinforcement direction, wherein the first and the second reinforcement direction form an angle of 52-88°, wherein the longitudinal direction of the fabric and one of the first and the second reinforcement direction form an angle of 30° or less, and wherein the first and the second fabric layer are chemically and/or mechanically connected to one another.

The second object of the invention is solved by a method of preparing a hose or pipe comprising the steps of:

    i) providing a strip of fabric of the present invention,
    ii) forming a hose or pipe preform comprising a polymer matrix, and
    iii) applying the fabric to the polymer matrix of the hose or pipe preform by wrapping the fabric strip around the preform;

and by a hose or pipe obtainable by this method.

Figure

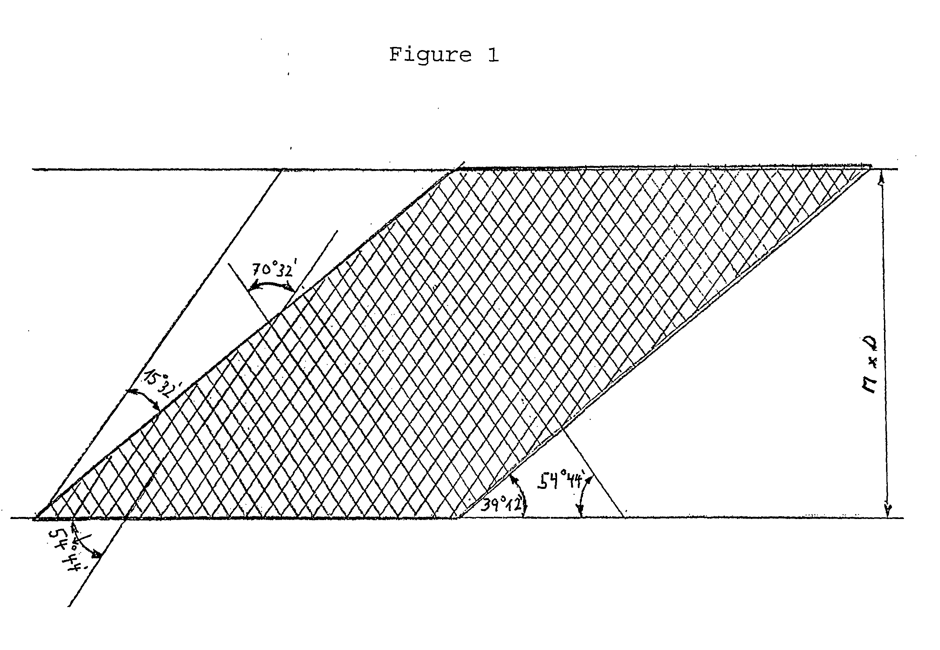

Figure 1 shows the wrapping of one embodiment of the fabric of the present invention around a hose preform.

Detailed Description of the Invention

The fabric of the present invention is generally prepared by first orienting the individual yarn layers separately on a support such as a transport system, e.g. a type of endless belt, and then connecting the layers thereby forming a fabric having at least two layers.

The orientation of the individual yarn layers is carried out such that the first and the second reinforcement direction, which are defined by the direction of the respective yarn layers, form an angle of 52-88°, more preferably 61-79°, even more preferably 68-72°, and most preferably 70°32'. Moreover, none of the reinforcement yarn layers extend in the longitudinal direction of the fabric. In other words, both the first and the second yarn layer are bias yarn layers. Consequently, there is no need of long warp threads having the same length as the longitudinal extension of the fabric. Furthermore, the yarn layers are arranged in such a way that the longitudinal direction of the fabric and one of the first and the second reinforcement direction form an angle of 30° or less, preferably 16° or less. This allows an efficient wrapping of the fabric of the present invention around a hose or pipe preform.

This orientation of the yarn layers is preferably achieved by laying the respective yarns on some type of support which allows the subsequent mechanical or chemical connection of the yarn layers. This support may be a transport system, for example an endless belt. This support is most preferably provided in a knitting machine having several weft insertion systems such as the Malimo Multiaxial of Karl Mayer Textilmaschinenfabrik GmbH, Obertshausen, Germany, or the tricot machine with multiaxial weft insertion (Copcentra MAX 3 CNC) of LIBA Maschinenfabrik GmbH, Naila, Germany.

Alternatively, each of the yarn layers may be individually incorporated in a fabric layer. Each fabric layer may have a woven, knitted, laid, stitched, or interlaced construction or a construction of a combination of two or more of these fabrication ways. In a first step of the manufacture of a woven, knitted, laid, stitched or interlaced layer of the fabric of the present invention, the yarn which is intended to provide reinforcement (in the following also referred to as "reinforcing yarn") is, as supplied by a yarn manufacturer, first assembled and then optionally twisted prior to beaming. In a more preferred embodiment, the fabric layer is directly woven or knitted from a creel. For woven fabrics, the reinforcing yarn is the warp yarn. The fabric is then produced in a manner known to the skilled in the art. The fabric construction or weave is not limited. The orientation of the yarn layers, provided as fabric layers in this embodiment, is then achieved by orienting the first and the second fabric layer such that the above-described requirements as to the orientation of the yarn layers are met.

The fabric of the present invention may comprise more than the two yarn layers having the above-defined orientation.

As reinforcing yarn, any filament yarn may be used which can provide sufficient reinforcement. The preferred reinforcing yarns include glass yarn, basalt yarn, carbon yarn, aramid yarn, steel or other metal yarn, rayon yarn, polyamide yarn such as PA11, PA12, PA6, PA66, PA4.6, polyester yarn such as PETP and PBT, and poly(ethylene-2,6-naphthalene dicarboxylate) (PEN). A mixture of different yarns may also be used. Moreover, the reinforcing yarn may be covered by another yarn of another yarn type by means of spinning, covering, twisting, or texturing. For most applications, the use of polyester yarn is particularly preferred. When the hose is a silicone hose or a pipe, the use of glass yarn is particularly preferred, particularly glass yarn which has previously been embedded in silicone and which preferably contains at least 0.50 wt.% silicone with respect to the total weight of the glass yarn. Moreover, in terms of adhesion between the reinforcement yarns and material of the pipe, it is preferred to use fibers in combination with the reinforcement yarns having the same chemical nature as said material, e.g. PE fibers for a PE-preform, the PE fibers being used for example in combination with the polyester fibers.

When using a polyester yarn, polyester is preferably used in an amount of at least 60 wt.% of the reinforcement yarn, more preferably at least 80 wt.%, most preferably 100 wt.% with respect to the total amount of reinforcement yarn.

According to the present invention, any polyester yarn may be used, both monofilament yarns and multifilament yarns, although multifilament yarns and ply yarns of two filaments are preferred.

Preferred are low twist polyester yarns. The twist level of the polyester yarn is thus preferably less than 150 turns per meter, more preferably less than 80 turns per meter, most preferably a polyester yarn having no twist at all is used. In the case that polyester yarns having no twist are used, intermingled yarns are preferred.

In a particularly preferred embodiment, the polyester yarn is a HT (high tenacity; tenacity of more than 6 g/dtex; generally showing an elongation of 12 % to 20 %) and particularly a HMLS (high modulus low shrinking; generally showing an elongation of less than 12 %) polyester yarn.

Particularly preferred are yarns having a tenacity of at least 6.0 cN/dtex, more preferably a tenacity in the range of 6 to 10 g/dtex, most preferably in the range of 7.0 to 8.5 g/dtex.

The titer of the yarn is preferably in the range of 1100 to 6600 dtex.

Moreover, the yarn of the present invention has preferably a maximum elongation at break of 10 %, more preferably an elongation at break in the range of 3 to 8 %, in longitudinal direction.

The yarn used in the present invention preferably shows a comparably high modulus at initial load, i. e. the yarn has an elongation of 3.5 % or less, preferably 2.75 % or less, more preferably 2.5 % or less, at a load of 2.35 g/dtex in longitudinal direction.

Tensile strength, tenacity, and elongation under load and elongation at break are determined at standard conditions. The tension test providing these data is generally carried out according to ASTM D-2256.

The density of reinforcing yarn mainly depends on the requested burst pressure and diameter of the hose or pipe. For most applications, the preferred range of the yarn density is from 4000 to 100000 dtex/cm, more preferably 10000 to 40000 dtex/cm, the yarn density being defined by the number of yarns per cm in the direction perpendicular to the yarn direction times the thickness of the yarn in dtex.

Particularly preferred embodiments using polyester yarn have the following constructions and yarn densities:

2200 dtex x 7.6 yarns/cm = 16720 dtex/cm

3300 dtex (1100*3) x 6.9 yarns /cm = 22720 dtex/cm

3300 dtex (1100*3) x 7.8 yarns /cm = 25740 dtex/cm

4400 dtex (2200*2) x 8.4 yarns /cm = 36960 dtex/cm

After orienting the yarn layers of the fabric of the present invention, the yarn layers are then connected to one another, either by chemical means or by mechanical means. The connection is such that the angle between the reinforcement directions is not significantly altered in the subsequent handling of the fabric, e.g. during the manufacture of a hose or pipe. The chemical means includes rubberising, plastification, fixing with chemicals or adhesives. The mechanical means include the use of a connecting yarn used to connect the individual layers, for example by stitching, knitting or binding, particularly by stitching.

The individual yarn layers do not necessarily contact each other. Instead, a polymer or rubber foil or sheet may be provided between the layers. Preferably, the material of this foil or sheet is similar or even identical to the material used for the production of the rubber product, e.g. the hose or pipe preform. For example, the material of the foil or sheet is preferably polyethylene (LD-PE, MD-PE, or HD-PE) for use in a PE pipe, or SBR rubber or any other rubber for use with a rubber hose. This intermediate foil or sheet may serve as chemical means for connecting the individual yarn layers provided that its adhesive and cohesive properties are sufficient.

A corresponding foil or sheet could also be applied on one or both surfaces of the fabric of the invention. In this case, it is particularly preferred to use a foil or sheet consisting of rubber since this provides a good tackiness. In the case of a plastic sheet or foil such as a PE sheet, these provide sufficient tackiness upon heating.

The chemical means for connecting the yarn layers include extrudable materials, solvent-based systems, and aqueous dispersions based on PE, PP, PVC, and rubber, or blends thereof, or the chemical systems used for bonding in Stabilon® fabrics, supplied by Milliken Europe, Gent, Belgium.

In a preferred embodiment, the first and second yarn layers (at least) are connected with each other with a connecting yarn. More preferably, said connecting yarn provides a connection between the layers by stitching, knitting or binding.

In particular when the product is to be cured and/or shaped after application of the reinforcement fabric of the present invention, it is beneficial to use a connecting yarn which shows sufficient tenacity when applying the fabric during the manufacture of the rubber or plastic product, but which does not prevent a uniform deformation of the fabric when shaping the product. The connecting yarns have thus preferably a tenacity at 200 °C, preferably 170 °C, more preferably 130 °C, which is 20 % or less, preferably 10 % or less with respect to the tenacity of the connecting yarns at 25 °C. At 25 °C, the connecting yarns have preferably a tenacity which is 80 % or less of the tenacity of the reinforcement yarn. Moreover, the tenacity of the connecting yarn is preferably at least 3 cN/tex.

In a preferred embodiment of the present invention, this loss in tenacity at higher temperatures is the result of a partial and most preferably complete melting of the connecting yarn. Thus, the connecting yarn has preferably a melting point below 200 °C, more preferably below 170 °C and in a particularly preferred embodiment below 130 °C. The melting point is determined by a standard method which includes observing the sample under the a microscope, equipped with a heated sample holder, while the sample is heated in a controlled way via heating the sample holder.

Connecting yarns to be used according to the present invention may be monofilament yarns, tapes, multifilament yarns (flat or textured), spun yarns composed of fibers, or core/sheath yarns. The yarns can consist of a single fiber type or of a blend or combination of different fiber types. Useful fibers include cotton fibers, polyethylene fibers, polypropylene fibers, fibers of ethylene-propylene copolymers, low-melting nylon fibers, polyamide fibers, and polyester fibers, and blends or combinations of two or more of these fibers. Polyamide yarns and flat or textured polyester filament yarns are particularly preferred.

The connecting yarns used according to the present invention have a preferred thickness of less than 500 dtex, more preferably a thickness of less than 150 dtex.

The connecting yarns used for the production of the fabric of the present invention have preferably an elongation at break at 25 °C of at least 20 %, more preferably at least 50 %, most preferably 70 to 300 %.

To enhance adhesion to the subsequently applied rubber or polymer composition, the fabric of the present invention is preferably coated with a composition promoting adhesion, so-called adhesion promoters, and/or with a tackifier.

Any composition known to enhance the adhesion between fabric and rubber or polymer can be used according to the present invention. The treatment with adhesion promoter is preferably effected by dipping the fabric of the present invention in an RFL-formulation (resorcinol formaldehyde latex), preferably an aqueous RFL-formulation. The formulation contains a resorcinol-formaldehyde (RF) condensate. The RF liquid is not limited in its type, and there can be used, for example, a novolac type, a resol type or a mixed type of those. The molar ratio of resorcinol to formaldehyde is preferably 1/1 to 1/3. Latex (e.g. a vinylpyridine latex) is added in a weight ratio of the resorcinol-formaldehyde of typically 4/1 to 15/1. The solid content of the RFL formulation is preferably from 5 to 20 % by weight. Preferred adhesion promoters include those disclosed in US 6,248,450.

For pipes, particularly those using thermoplastic resins as matrix such as PE, PP, PVC or cross-linked PE or other thermoplastics, silanes can be used as adhesion promoter.

Although the step of applying an adhesion promoter may be carried out before assembling the individual layers of the fabric of the present invention, it is preferably carried out afterwards by dipping or spraying the adhesion promoter on the fabric and subsequent drying and heatsetting. The drying is preferably carried out at a temperature of 100 to 140°C, more preferably 110 to 130°C, most preferably 120°C, the drying time being preferably in the range of 0.2 to 2 minutes, more preferably 0.5 to 1.5 minutes, most preferably 1 minute. The subsequent heatsetting for polymerising the adhesion promoter is preferably carried out at a temperature in the range of 160 to 250°C, more preferably 170 to 190°C, most preferably 180°C/ the heatsetting time being preferably in the range of 0.2 to 2 minutes, more preferably 0.5 to 1.5 minutes, most preferably 1 minute.

The amount of adhesion promoter applied to the fabric is preferably in the range of 1 to 30 wt.%, more preferably 5 to 15 wt.%, most preferably 8 to 12 wt.% with respect to the total dry weight of the fabric.

The fabric may also undergo a plasma or corona treatment to promote or enhance their adhesion to the rubber. The plasma or corona treatment can be done prior to or instead of the fabric dipping operation.

When using polyester yarn as reinforcing yarn, it is moreover preferred to stretch the yarn before constructing the fabric prior to and/or during polymerisation of the adhesion promoter.

For example, this stretching may be carried out by applying a tension of at least 0.01 N/dtex for at least one minute during the polymerisation, more preferably at least 0.02 N/dtex, for example 0.025 N/dtex. Although the stretching conditions depend on the temperature, the exposure time, and the applied tension, it is particularly preferred to apply a stretch of at least 0.01 N/dtex, more preferably at least 0.02 N/dtex, for example 0.025 N/dtex both after dipping into a solution of the adhesion promoter and heatsetting. Additionally, it is particularly preferred to apply a tension of at least 0.01 N/dtex, more preferably at least 0.02 N/dtex, for example 0.025 N/ dtex at 200 °C to 220°C, more preferably 210°C to the yarn during at least 1 minute prior to dipping the yarn into a solution of the adhesion promoter and then to maintain a stretch of at least 0.01 N/dtex during dipping and heatsetting. The exact stretching conditions can be easily determined by varying the temperature, exposure time and tension and checking the elongation under load of the fabric obtained.

Furthermore, the residual shrinkage of the reinforcement yarn in reinforcement direction is preferably low. The reinforcement yarns thus have preferably a shrinkage of 3.5 % or less after exposure in hot air to 170°C during 3 minutes in reinforcement direction. In a more preferred embodiment, the shrinkage is less than 2.5 % after exposure to 170 °C during 3 minutes in reinforcement direction. The residual shrinkage may be tested by taking a yarn out of the fabric and testing the residual shrinkage of the yarn, e.g. on a Testrite instrument.

The fabric of the present invention is preferably also coated with a tackifier. A tackifier is a substance that, when applied to the fabric, provides sufficient stickiness to the fabric that is needed to hold the fabric in place on the pre-form of the hose or pipe during subsequent manufacturing operations. Although any tackifying product may be used as long as it shows sufficient stickiness, preferred tackifiers for hoses include pressure sensitive adhesives such as natural and synthetic rubbers, rosins, phenol-formaldehyde resins, hydrocarbon resins, rubbers in conjuntion with rosins, phenolformaldehyde resins, or hydrocarbon resins, polyacrylates, polymethacrylates, poly(vinyl ethers), polyisobutenes and polyurethanes. For pipes, preferred tackifiers include hydrogenated synthetic hydrocarbons (e.g. C5 or C9 components), aromatics, rosin esters, dicyclopentadienes, and derivatives, and mixtures of these compositions. Particularly preferred are aqueous tackifier systems.

The amount of tackifier is preferably in the range of 1 to 40 wt.%, more preferred in the range of 2 to 30 wt.%, even more preferred in the range of 4 to 16 wt.% with respect to the total dry weight of the fabric.

It is generally easy to determine as to whether a specific substance it suitable as tackifier since it can be easily found out whether the substance fulfils the above-indicated purpose of the tackifier. In case of doubt, the suitability of a substance as a tackifier in the present invention may be determined as follows: Two probes of fabric (e.g. a fabric with polyester warp yarn 2200/1, 7.6 ends per cm and cotton yarn of 110 dtex as weft yarn, the fabric being woven with 1.8 picks/cm) are mounted in a TA-XT2I Texture analyser (TA-Instruments) with a contact surface of 25 cm$^2$, the tackifier to be tested being applied over the whole contact surface. A 5 kg loadcell is used and a preload of 20 N is applied during 60 seconds. The adhesive forces were then measured with a speed of 0.2 mm/s. Thereby a curve is obtained, the maximum of which is referred to as peak force. If the peak force measured in the test is more than 0.1 N, the substance is suitable to be used as tackifier in combination with the fabric of the test for reinforcing hoses or pipes. The adhesion between two non-tackified fabrics is set to 0 N in this test. More preferred are those tackifiers which show a peak force of at least 1 N in this test. The same test may be carried out with fabrics which are coated with adhesion promoter to check whether a specific substance is suitable in combination with a specific adhesion promoter.

The reinforcement fabric may be tackified at just one or both surfaces. For example, the entire fabric may be impregnated with a tackifying substance. The coating operation of the fabric with the tackifier may be performed by means of dipping or spraying the complete fabric. Alternatively, the individual layers of the fabric or even the individual reinforcing yarns may be treated or coated before their incorporation in the fabric.

When using polyester yarn, it is preferred to apply the tackifier on the yarn before assembling the fabric and, when drying the tackifier, to apply tension on the yarn. It is particularly preferred to apply a tension of at least 0.01 N/dtex during at least 1 minute, for example a tension of between 0.005 N/dtex and 0.02 N/dtex for 0.5 to 2 minutes. The exact stretching conditions can be easily determined by varying the temperature, exposure time and tension and checking the elongation under load of the yarn obtained. The drying is preferably carried out at a temperature in the range of 100 to 140°C.

According to the present invention, the fabric may be coated with adhesion promoter or tackifier depending on the application of the fabric. In a preferred embodiment, the fabric is coated with both adhesion promoter and tackifier.

It is particularly preferred to apply the tackifier to the fabric simultaneously with the adhesion promoter. In this case, the above described preferred treatment conditions for the treatment of the adhesion promoter are also preferred for the simultaneous treatment of adhesion promoter and tackifier.

In a particularly preferred embodiment, the connecting yarn, chemical bonding agent or the foil or sheet provided on one or both surfaces of the fabric of the invention is made of a material which softens at elevated temperature. In this way, the fabric may be heated immediately prior to wrapping it on the pipe preform thereby softening the material, this material then creating tack in order to keep the fabric on its position prior to applying the outer resin layer. In this case, the use of an additional tackifier is not preferred.

The fabric of the invention is then preferably slit into reels of fabric strip or tape. The tackifying helps to maintain the integrity of the fabric strips after slitting the reinforcement fabric. The strip or tape may then be packaged for supplying to e.g. hose and pipe manufacturers.

Alternatively, the fabric, preferably coated with adhesion promoter could be packaged and sold as such to the hose and pipe manufacturer who then applies the tackifier such as rubber on the fabric, preferably by calandering. Subsequently, the fabric may be slit in tape form and then for example be used on spools for hose manufacturing.

The fabrics of the present invention may be employed in the production of a hose or pipe.

The present invention thus also provides a method of preparing a hose or pipe, comprising the steps of:

(a) providing a strip of fabric according to the present invention,
(b) forming a pre-form of said hose or pipe comprising a polymer matrix, and
(c) applying the fabric directly to the polymer matrix of the hose or pipe pre-form by wrapping the fabric strip around the pre-form.

The hose or pipe has a preferred inside diameter of larger than 2.5 cm. The pre-form may be made of any polymer or rubber material. For pre-forms of hoses, the rubber to be used includes natural rubber, nitrile rubber (NBR), hydrogenated nitrile rubber (hydrogenated NBR), butadiene rubber (BR), isoprene rubber (IR), chlorosulfonic polyethylene (CSM), chloroprene rubber (CR), ethylene-propylene-diene rubber (EPDM), styrene-butadiene rubber (SBR), and silicone rubber. The pipe pre-forms preferably comprise resins such as PVC, PE or PP.

In the method of the present invention, the fabric strip is then applied directly to the polymer matrix of the hose or pipe pre-form by wrapping the strip around the pre-form, preferably by wrapping in a helical fashion. The gauge of the fabric strip is preferably calculated according to the formula: $G = 0.707 \times \pi \times d$, where G is the gauge, and d is the diameter of the pre-form. The width of the fabric strip is preferably $W = 0.577 \times \pi \times d$.

The angle of the wrapping around the pre-form depends on the angles formed between the reinforcing directions and the longitudinal direction of the fabric strip. The wrapping is preferably carried out such that the longitudinal direction of the fabric and one reinforcement direction form an angle of 45° to 65°, preferably 55°, most preferably 54°44'. For example, if one of the reinforcing directions forms an angle of 15° with respect to the longitudinal direction, the wrapping is preferably carried out at an angle of 30° to 50°, preferably 40°, with respect to the longitudinal direction of the pre-form, as illustrated in Figure 1.

Further polymer or rubber material is then typically applied to (e.g. extruded over) the wrapped reinforcement fabric.

Examples

Example 1:

2200 dtex HT polyester yarn was oriented on a multiaxial knitting machine such that one yarn layer formed an angle of +10° with respect to the longitudinal direction and the other yarn layer formed an angle of -60° with respect to the longitudinal direction. The density of the yarn was 7 ends per cm in both directions. The two layers were then combined by knitting using a knitting yarn (167 dtex PETP-FTF) in the longitudinal direction at a density of 1 per cm.

Example 2:

600 tex glass yarn was oriented via laying the yarn on a conveyer system such that one yarn layer formed an angle of +15°32' with respect to the longitudinal direction and the other yarn layer formed an angle of -55° with respect to the longitudinal direction. The density of the yarn was 4 ends per cm in both directions. The reinforcement layers were connected by using a PVC solution which was dried during the process before winding-up.

**Claims**

1. Fabric providing reinforcement in at least two directions, at least comprising a first bias filament yarn layer having a first reinforcement direction and a second bias filament yarn layer having a second reinforcement direction, wherein the first and the second reinforcement direction form an angle of 52-88°, wherein the longitudinal direction of the fabric and one of the-first and the second reinforcement direction form an angle of 30° or less and wherein the first and the second yarn layer are chemically and/or mechanically connected to one another.

2. Fabric of claim 1, wherein the angle between the first and the second reinforcement direction is 61-79°.

3. Fabric of any of the preceding claims, wherein the at least first and second yarn layers are connected to each other by a connecting yarn.

4. Fabric of claim 3, wherein the connection of the at least two layers is achieved by stitching, knitting or binding with the connecting yarn.

5. Fabric of claim 3 or 4, wherein the connecting yarn has a tenacity of less than 80 % of that of one or both of the yarn layers in reinforcement direction.

6. Fabric of any of claims 4 or 5, wherein the tenacity of the connecting yarn at 25°C is 3 cN/tex or more, and its tenacity at 200°C is 20 % or less of its tenacity at 25°C.

7. Fabric of any of the preceding claims, wherein the at least first and second yarn layers are connected to each other by rubberizing, plastification, or fixing with chemicals or adhesives.

8. Fabric of any of the preceding claims, wherein the tenacity of the first and/or second yarn layer in reinforcement direction is at least 6 cN/dtex.

9. Fabric of any of claims 1 to 7, wherein the yarn of the first and/or second yarn layer is a glass yarn.

10. Fabric of any of the preceding claims, wherein a polymer or rubber foil or sheet is provided between the first yarn layer and the second yarn layer or on at least one side of the fabric.

11. Fabric of any of the preceding claims, wherein the fabric is coated with an adhesion promoter and/or a tackifier.

12. Method of preparing a hose or pipe comprising the steps of:

    i) providing a strip of fabric of any of the preceding claims,
    ii) forming a hose or pipe preform comprising a polymer matrix, and
    iii) applying the fabric to the polymer matrix of the hose or pipe preform by wrapping the fabric strip around the preform.

13. Method of claim 12, wherein the fabric is provided with an adhesion promoter prior to applying it to the polymer matrix of the hose or pipe preform.

14. Method of claim 13, wherein the adhesion promoter is provided by dipping the fabric into an adhesion promoter solution.

15. Method of any claims 12-14, wherein the fabric is wrapped around the pre-form such that the longitudinal direction of the fabric and one reinforcement direction form an angle of 45° to 65°.

16. Method of any of claims 12-15, comprising the additional step of applying a second polymer matrix over the polymer matrix of the preform wrapped with a fabric.

17. Hose or pipe obtainable by the method of any of claims 12-16.

18. Hose of claim 17, wherein the polymer matrix is composed of silicone.

19. Hose of claim 18, wherein the reinforcement is provided by glass yarn.

20. Use of the fabric of any of claims 1 to 11 for reinforcing a polymer or rubber product.

21. Use of claim 20, wherein the polymer or rubber product is a hose or pipe.

Figure 1

## EUROPEAN SEARCH REPORT

**European Patent Office**

Application Number

EP 01 12 4267

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A,D | WO 99 39032 A (MILLIKEN EUROP NV ;MEYER WILLY DE (BE); GILPATRICK MICHAEL (US)) 5 August 1999 (1999-08-05) * the whole document * | 1,2,7, 12,15, 19,21 | D03D13/00 D03D15/00 B29C70/22 F16L11/08 D04H3/04 |
| A | EP 0 425 099 A (MILLIKEN EUROP NV ;VREDESTEIN ICOPRO BV (NL)) 2 May 1991 (1991-05-02) * the whole document * | 1,3-6, 12-17, 20,21 | |
| A | DE 26 26 217 B (PHENIX) 15 December 1977 (1977-12-15) * the whole document * | 1,2,12, 15,17, 20,21 | |
| A,D | US 4 845 963 A (PAREKH DHAN) 11 July 1989 (1989-07-11) * the whole document * | 1,3-6, 12,17, 20,21 | |
| A | US 4 567 738 A (HUTSON HAROLD K ET AL) 4 February 1986 (1986-02-04) * figures 3,5 * | 1-3 | TECHNICAL FIELDS SEARCHED (Int.Cl.7) D03D B29C F16L D04H |

The present search report has been drawn up for all claims

| Place of search | Date of completion of the search | Examiner |
|---|---|---|
| THE HAGUE | 7 June 2002 | Rebiere, J-L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 304 404 A1**

## ANNEX TO THE EUROPEAN SEARCH REPORT
## ON EUROPEAN PATENT APPLICATION NO.

EP 01 12 4267

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2002

| Patent document cited in search report | | Publication date | Patent family member(s) | | Publication date |
|---|---|---|---|---|---|
| WO 9939032 | A | 05-08-1999 | DE | 19803656 A1 | 19-08-1999 |
| | | | AU | 2520399 A | 16-08-1999 |
| | | | WO | 9939032 A1 | 05-08-1999 |
| | | | EP | 1051548 A1 | 15-11-2000 |
| | | | US | 6378568 B1 | 30-04-2002 |
| | | | US | 2002059963 A1 | 23-05-2002 |
| | | | US | 2002056485 A1 | 16-05-2002 |
| EP 0425099 | A | 02-05-1991 | NL | 8902868 A | 17-06-1991 |
| | | | NL | 8902869 A | 17-06-1991 |
| | | | AT | 170238 T | 15-09-1998 |
| | | | AU | 640689 B2 | 02-09-1993 |
| | | | AU | 6318290 A | 11-04-1991 |
| | | | CA | 2026413 A1 | 29-03-1991 |
| | | | DE | 69032592 D1 | 01-10-1998 |
| | | | DE | 69032592 T2 | 12-05-1999 |
| | | | EP | 0425099 A2 | 02-05-1991 |
| | | | ES | 2119742 T3 | 16-10-1998 |
| | | | FI | 106805 B1 | 12-04-2001 |
| | | | IE | 903434 A1 | 10-04-1991 |
| | | | JP | 2898386 B2 | 31-05-1999 |
| | | | JP | 3241036 A | 28-10-1991 |
| | | | KR | 139081 B1 | 15-05-1998 |
| | | | NO | 180111 B | 11-11-1996 |
| | | | PT | 95458 A ,B | 22-05-1991 |
| | | | US | 5229056 A | 20-07-1993 |
| | | | ZA | 9007723 A | 30-10-1991 |
| DE 2626217 | B | 15-12-1977 | DE | 2626217 B1 | 15-12-1977 |
| US 4845963 | A | 11-07-1989 | NONE | | |
| US 4567738 | A | 04-02-1986 | NONE | | |

For more details about this annex : see Official Journal of the European Patent Office, No. 12/82

10